# EUROPEAN PATENT APPLICATION

(11) **EP 4 550 716 A1**
(43) Date of publication of application: **07.05.2025**
(21) Application number: 23207759.4
(22) Date of filing: 03.11.2023
(51) Int. Cl.: H04L 9/08

(54) **QKD SYSTEM AND METHOD WITH INCREASED BANDWIDTH**

(71) Applicant: ID Quantique S.A., 1227 Carouge (CH)
(72) Inventor: CAMUS, Thomas, 74930 Arbusigny (FR); LAYAT, Kevin, 74930 Pers-Jussy (FR)
(74) Representative: KATZAROV S.A.

(57) **Abstract**

The present invention relates to a Quantum Key Distribution system comprising an emitter and a receiver adapted to exchange QKD-based key through a service continuity mode comprising: starting (S100) the process and triggering (S101) QKD-based key exchange between the emitter and the receiver, exchanging (S102) a first key K1 between the emitter and the receiver, generating (S103) a second key K2 at the emitter via its QRNG, and encrypting (S104) K2 with K1 as a message C, and send it to the receiver, decrypting (S105) message C with K1 to obtain K2 at the receiver, and delivering (S106, S106') K2 to the respective consumers, characterized in that the QKD exchanged key K1 is a single key with fixed size, and the encrypting and decrypting procedures of K2 are using a symmetric encryption scheme.

## Description

### Technical Field

The present invention relates to a method and a system for increasing the bandwidth of a QKD system and more particularly to a method and a system for increasing the bandwidth of a QKD system without impacting the quality of the encryption keys.

### Background of the art

Quantum key distribution, in the following also referred to as QKD is part of the general Quantum cryptography technology and is a method allowing the distribution of a secret key between two distant parties, the emitter usually called Alice and the receiver usually called Bob, with a provable absolute security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

However, a major problem in the use of QKD is the limited key rate provided by such a system. Especially, when QKD is implemented in large size networks running on long distances, it might happen that the user is left without bits to be used. In fact, it should be recalled that data a user can transfer can be as big as the data the user has exchanged with the QKD.

Despite the above-mentioned limitation, it is still extremely interesting for a user to implement the QKD in its telecommunications network because of the high security it allows notwithstanding the limitation in bandwidth.

At this purpose, several solutions have been investigated to try to increase the bandwidth. Below we report the most common options.
- Using a key derivation function or a key expansion mechanism to artificially augment the size of QKD-exchanged keys. However, this solution offers randomness of a much lower quality than the one of a pure QKD-based systems. In particular, the maximal entropy of QKD-exchanged key is diluted across a larger bitstream.
- Relying on classical key exchange mechanism instead of QKD, such as RSA-based or Elliptic-Curve Cryptography-based schemes. However, such technologies are not quantum-safe.
- Relying on a post-quantum cryptographic scheme instead of QKD. This solution is quantum-safe and offers satisfactory key rate. However, the assumptions on which it relies are much less robust and way less understood than the ones that guarantee QKD and symmetric encryption security.

In view of the above, there is a need to increase the bandwidth offered by the QKD while the keys provided to the user maintain the same level of security offered by the QKD.

With current techniques, the increase of the bandwidth is achieved at the expenses of security. In fact, either classical cryptography is used or post-quantum algorithm whose security proofs are missing.

The object of the present invention is therefore to provide a system and a method which permit to increase the QKD bandwidth without impacting the quality of the encryption keys.

### Summary of the invention

The above problems are solved by the present invention which is based on a new functioning mode of the QKD which is a Service Continuity (SC) mode, in which the security of the transmission of the key is lowered in favor of higher performances.

Another aspect of the invention comprises the general approach of providing a QKD system which can operate in two different modes: (i) a Information-Theoretic Secure (ITS) mode, where the highest security is guaranteed but with the lowest consumer key rate, and (ii) said Service Continuity (SC) mode.

The ITS mode heavily relies on the One-Time Pad (OTP) encryption, which is both perfectly secure and highly inefficient. Whereas the SC mode combines the QKD protocol with any symmetric encryption scheme, such as a Block Cipher algorithm, to ensure continuity of the key delivery service, so that there are always keys ready to be used by the consumer.

It needs to be stressed that the SC mode offers weaker guarantees on the security of the transmission of keys, but the keys itself have the same quality of the ITS mode. In this invention what is changed is the way in which such data are transferred to the users as will be described in the following sections.

A first aspect of the invention is a quantum Key Distribution system comprising an emitter and a receiver adapted to exchange QKD-based key through a service continuity mode comprising starting the process and triggering QKD-based key exchange between the emitter and the receiver, exchanging a first key K1 between the emitter and the receiver, generating a second key K2 at the emitter via its QRNG, and encrypting K2 with K1 as a message C, and send it to the receiver, decrypting message C with K1 to obtain K2 at the receiver, and delivering K2 to the respective consumers, characterized in that the QKD exchanged key K1 is a single key with fixed size, and the encrypting and decrypting procedures of K2 are using a symmetric encryption scheme.

Advantageously, the symmetric encryption scheme is a Block Cipher scheme such as an AES or ARIA.

According to a preferred embodiment of the present invention, K1 is a 256-bit key and K2 is a N*256 bits key.

Preferably, the symmetric encryption scheme consists in BlockCipher Encryption procedure such that C = BlockCipherEnc(key=K1, data=K2).

Advantageously, the symmetric decryption scheme consists in BlockCipher Decryption procedure such that K2 = BlockCipherDec(key=K1, data=C).

Preferably, the quantum Key Distribution system further comprises a switching means adapted to switch its mode of operation between said service continuity mode and an ITS mode.

According to a preferred embodiment of the present invention, the quantum Key Distribution system further comprises a controller adapted to control the switching means so as to switch to ITS mode when a first predetermined security threshold is detected.

Advantageously, the controller is adapted to control the switching means so as to switch to service continuity mode when a second predetermined security threshold, lower than the first predetermined security threshold, is detected.

A second aspect of the invention is a Quantum Key Distribution method to be implemented by the Quantum Key Distribution system of the first aspect comprising starting the process and triggering QKD-based key exchange between the emitter and the receiver, exchanging a first key K1 between the emitter and the receiver, generating a second key K2 at the emitter via its QRNG, and encrypting K2 with K1 as a message C, and send it to the receiver, decrypting message C with K1 to obtain K2 at the receiver, and delivering K2 to the respective consumers, characterized in that the QKD exchanged key K1 is a single key with fixed size, and the encrypting and decrypting procedures of K2 are using a symmetric encryption scheme.

A third aspect of the invention is a Quantum Key Distribution method comprising starting the process and triggering QKD-based key exchange between the emitter and the receiver, exchanging a first key K1 between the emitter and the receiver, generating a second key K2 at the emitter via its QRNG, and encrypting K2 with K1 as a message C, and send it to the receiver, decrypting message C with K1 to obtain K2 at the receiver, and delivering K2 to the respective consumers, characterized in that the QKD exchanged key K1 is a single key with fixed size, and the encrypting and decrypting procedures of K2 are using a symmetric encryption scheme and to a quantum Key Distribution system adapted to carry out said method.

Another aspect of the invention is that the data received by the users, in whichever of the two modes, are not changed or manipulated in any way, as there is no derivation nor expansion of consumer keys. The particular advantages of this device of the invention being similar to the ones of the method of the first aspect of the invention, they will not be repeated here.

One main advantage provided by the invention is that the SC mode provides keys of quality as high as the ones of the ITS mode. In fact, in both modes, consumers keys are generated using an embedded QRNG device, without any stretching, derivation or expansion of any sort. Consumers keys are therefore provably fully entropic in both modes.

Also, in the present invention, unlike the ITS mode, the SC mode key rate is not limited by the one of the leveraged QKD devices. In fact, in the SC mode, QKD-exchanged keys are used solely as symmetric encryption key. Most reasonable symmetric encryption schemes (such as AES or ARIA) and reasonable mode of operations (such as CTR or GCM) allow for key reusing without compromising the security, up to a very large threshold (e.g., 350GB for 16kB messages for the commonly deployed AES-256-GCM). It means that in SC mode, one QKD-exchanged key can be used to encrypt thousands and thousands of consumer keys, which are generated using a QRNG device. Because of the overall performance of symmetric encryption schemes, the SC mode would therefore be limited only by the QRNG key rate, which is as of now much higher than the QKD key rate.

The SC mode is quantum safe, it relies on a QKD-based key exchange, which is known to be perfectly secure, hence quantum safe and on symmetric encryption which like AES is part of the most of modern encryption schemes which are strongly trusted to be quantum safe.

One of the major aspects is that the SC mode security is lower than the one of the ITS mode, but arguably higher than the one of a PQC-based system Since the SC mode of the present invention allows the usage of any symmetric encryption scheme and is not bind to OTP-encryption, it is in general not ITS. However, outside of the involved QKD exchange, the SC mode security solely relies on the security on symmetric encryption, which is well understood since many decades whether from the classical, post-quantum, practical or theoretical viewpoints. On the other hand, PQC relies on convoluted mathematical assumptions, for some of which we lack significant hindsight.

The SC mode is more future-proof and agile than a PQC-based system. The invention is flexible in the sense that any reasonable symmetric algorithm could be leveraged, which allows for easy replacement in case of security breach. On the contrary, PQC deployment to replace RSA and ECC based security turns out to be a huge issue in many systems, which constrains intrinsically bind to the PQC algorithm selected. Moreover, the SC mode is able to support large encryption keys (e.g., 512-bits keys) with very limited impact on its bandwidth, which may turn out useful in the future with the ever-increasing computational power offered to adversaries.

### Brief description of the drawings

Further particular advantages and features of the invention will become more apparent from the following non-limitative description of at least one embodiment of the invention which will refer to the accompanying drawings, wherein:
- Figure 1 is a block diagram showing a conventional ITS mode of operation of a QKD system; and
- Figure 2 is a block diagram showing the SC mode of operation of the present invention.

### Detailed description of the invention

The present detailed description is intended to illustrate the invention in a non-limitative manner since any feature of an embodiment may be combined with any other feature of a different embodiment in an advantageous manner.

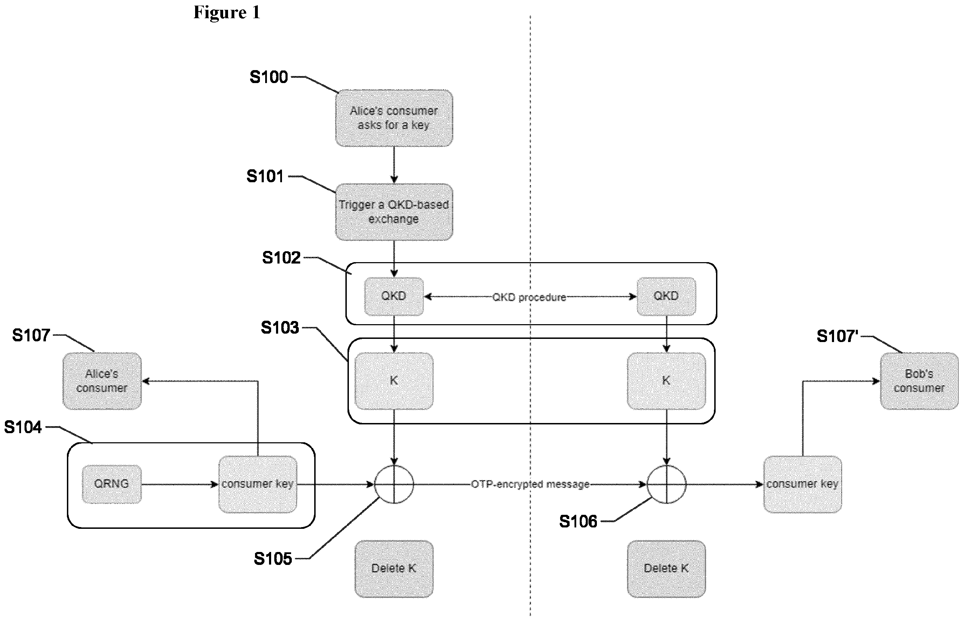

Figure 1 shows a conventional Information-Theoretic Secure (ITS) running mode of a QKD system. This is a usual mode, where the highest security is guaranteed but with the lowest consumer key rate. The ITS mode heavily relies on the One-Time Pad (OTP) encryption. OTP is an encryption scheme that uses an XOR between the data and a random key. The hypothesis on the key is that it needs to have the same size as the data, it needs to be used only once and it needs to come from uniformly distributed source of randomness.

In the one-Time Pad (OTP) encryption, consumer keys are transmitted using OTP encryption, with encryption keys being QKD-exchanged, which is both perfectly secure but lacks efficiency in terms of bandwidth because as explained below, the QKD-exchanged key K must be as large as the consumer key K0. In other words, to guarantee information-theoretic security, OTP-encryption keys K must be as long as the data they encrypt and never reused. Therefore, for N bits of consumer key transmitted between two QKD nodes, N bits of QKD-exchanged keys are consumed to encrypt the former. In other words, the bitrate of the ITS mode is equal to the one of the leveraged QKD device.

Figure 1 illustrates this, where at step S100 Alice's consumer starts the process and asks for a key such that Alice triggers a QKD-based key exchange with Bob in step S101. We easily see that the left side of the figure represents Alice and the right side represents Bob.

Following this, in steps S102, Alice and Bob exchange a plurality of keys K1,...,KN of preferably 256-bits each via QKD and concatenate it in a N*256 bits key K on each side, see step S103.

Then, Alice generates a N*256 bits key K0, called consumer key, via its QRNG in step S104, and computes, in step S105, message C = K0 XOR K and sends it to Bob. Once Bob receives C, it computes C XOR K0 in step 106, with K that he has thanks to the S102-S103 QKD step to recover K0.

Finally, in step S107 and S107', Alice and Bob both have K0 and deliver K0 to their respective consumer who can as from now use this key for any cryptographic purpose including encryption and K is deleted.

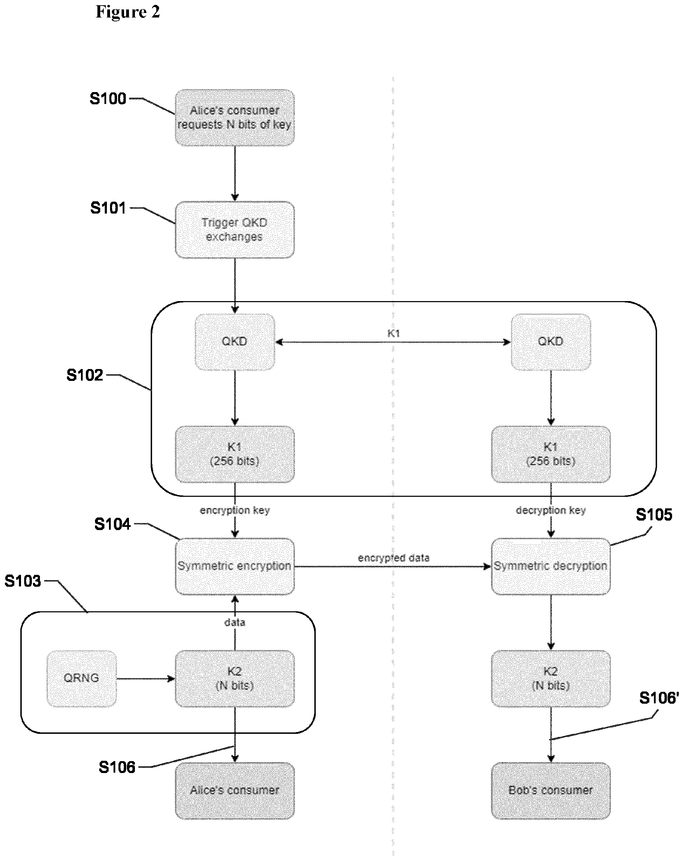

Figure 2 shows the first aspect of the invention which is a Service Continuity (SC) mode, wherein the security of the key transmission is lowered in favor of higher performances. This mode combines the QKD protocol with a symmetric encryption scheme, preferably a Block Cipher Encryption/decryption procedure, to ensure continuity of the key delivery service, so that there are always keys ready to be used by the consumer. Compared to the ITS mode, the SC mode offers weaker guarantees on the security of the transmission of keys, but it has several advantages compared to e.g., a key exchange mechanism solely based on Post-Quantum Cryptography (PQC).

In Figure 2, as in the ITS mode, at step S100 Alice's consumer starts the process and asks for a key such that Alice triggers a QKD-based key exchange with Bob in step S101. We easily see that the left side of the figure represents Alice and the right side represents Bob.

Then, at step S102 Alice and Bob exchange one single key K1 with fixed size, preferably 256 bits, via QKD and this is different from the ITS where Alice and Bob exchange N 256-bits keys K1,...,KN via QKD where the concatenated Key K may have a variable size according to the size of the data to be exchanged.

Then, in step S103 Alice generates a N*256 bits key K2 via its QRNG, and computes, in step S104, message C such that C = BlockCipherEnc(key=K1, data=K2) and sends it to Bob.

In Step S105, once Bob has received C and can compute BlockCipherDec(key=K1, data=C) with K1, that he has thanks to the S102 QKD step, to recover K2
Finally in step S106 and S106', like in the ITS mode, Alice and Bob deliver K2 to their respective consumer who can as from now use this key any cryptographic purpose including encryption.

The SC mode of the present invention therefore basically consists in replacing the OTP-encryption of the ITS by an appropriate symmetric encryption such as AES. Using such a solution permits to re-use the encryption keys exchanged via QKD (up to a certain threshold which depends on the encryption scheme leveraged). Another difference is that thanks to it, K1 has a fixed size no matter the size of K2.

Therefore, in the SC mode, N bits of QKD-exchanged key can be used to exchange a greater amount of consumer key. Because the usage threshold of symmetric encryption keys is usually quite large, this mode of operation allows in practice to obtain a key rate close the consumer key generation rate. Because these keys are generated using an embedded QRNG device, it means that the SC mode keyrate basically matches the one of the said devices.

Another aspect of the invention is based on the general approach that a QKD system that can operate in combining these two different modes.

In the solution presented here, the data received by the users, i.e., the emitter Alice and the receiver Bob for example, in whichever of the two modes, are not changed or manipulated in any ways, as there is no derivation nor expansion of consumer keys. Instead, the way in which such data are transferred to the users is changed, as it will be described in the following sections.

Therefore, the general idea of the invention is can be split in two distinct parts the invention of SC mode, which a new mode of operation for QKD-based networks and its cohabitation with the pre-existing ITS mode.

Regarding the combination of the SC and ITS modes, several implementations are foreseen as can coexist in a given system.

The choice of using one mode or the other could be left to the user, on a per-path per-link or per-system basis. The system can be left with some autonomy regarding mode switching, depending on various constrains such as QKD-exchanged key availability or consumer key rate needs. Notably, autonomous switching seems to be a task for which Al-based system are especially convenient and efficient.

The SC mode is also especially useful in a 1-to-N topology to counterbalance the reduction of key rate which inhered to the setup.

Although, the ITS mode may remain the preferred mode in setups where the key rate is not crucial, nor when the consumer needs for keys are lower than the QKD device key rate. However, SC and the SC/ITS hybrid mode are preferred for high key rates.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

**1.** Quantum Key Distribution system comprising an emitter and a receiver adapted to exchange QKD-based key through a service continuity mode comprising:
- starting (S100) the process and triggering (S101) QKD-based key exchange between the emitter and the receiver,
- exchanging (S102) a first key K1 between the emitter and the receiver,
- generating (S103) a second key K2 at the emitter via its QRNG, and
- encrypting (S104) K2 with K1 as a message C, and send it to the receiver,
- decrypting (S105) message C with K1 to obtain K2 at the receiver, and
- delivering (S106, S106') K2 to the respective consumers,
**characterized in that** the QKD exchanged key K1 is a single key with fixed size, and the encrypting and decrypting procedures of K2 are using a symmetric encryption scheme.

**2.** Quantum Key Distribution system according to claim 1, **characterized in that** the symmetric encryption scheme is an AES or ARIA.

**3.** Quantum Key Distribution system according to claim 1 or 2, **characterized in that** K1 is a 256-bit key and K2 is a N*256 bits key.

**4.** Quantum Key Distribution system according to any one of claims 1 to 3, **characterized in that** the symmetric encryption scheme consists in BlockCipher Encryption procedure such that C = BlockCipherEnc(key=K1, data=K2).

**5.** Quantum Key Distribution system according to any one of claims 1 to 4, **characterized in that** the symmetric decryption scheme consists in BlockCipher Decryption procedure such that K2 = BlockCipherDec(key=K1, data=C).

**6.** Quantum Key Distribution system according to any one of claims 1 to 5, **characterized in that** it further comprises a switching means adapted to switch its mode of operation between said service continuity mode and an ITS mode.

**7.** Quantum Key Distribution system according to any one of claims 1 to 6, **characterized in that** it further comprises a controller adapted to control the switching means so as to switch to ITS mode when a first predetermined security threshold is detected.

**8.** Quantum Key Distribution system according to any one of claims 1 to 7, **characterized in that** said controller is adapted to control the switching means so as to switch to service continuity mode when a second predetermined security threshold, lower than the first predetermined security threshold, is detected.

**10.** Quantum Key Distribution method to be implemented by the Quantum Key Distribution system of claims 1 to 9 comprising
- starting (S100) the process and triggering (S101) QKD-based key exchange between the emitter and the receiver,
- exchanging (S102) a first key K1 between the emitter and the receiver,
- generating (S103) a second key K2 at the emitter via its QRNG, and
- encrypting (S104) K2 with K1 as a message C, and send it to the receiver,
- decrypting (S105) message C with K1 to obtain K2 at the receiver, and
- delivering (S106, S106') K2 to the respective consumers,
**characterized in that** the QKD exchanged key K1 is a single key with fixed size, and the encrypting and decrypting procedures of K2 are using a symmetric encryption scheme.
